# EUROPÄISCHE PATENTANMELDUNG

(11) **EP 2 187 278 A1**
(43) Veröffentlichungstag der Anmeldung: **19.05.2010**
(21) Anmeldenummer: 08019937.5
(22) Anmeldetag: 14.11.2008
(51) Int. Cl.: G05B 19/042

(54) **Steuerungsanbindung eines Sicherheitsschaltgerätes**

(71) Anmelder: Siemens Aktiengesellschaft, 80333 München (DE)
(72) Erfinder: Beyer, Stefan, 92263 Ebermannsdorf (DE); Keil, Rainer, 90451 Nürnberg (DE)

(57) **Zusammenfassung**

Die Erfindung betrifft eine Sicherheitsschaltgerät (9) zum sicheren Abschalten eines elektrischen Verbrauchers und ein Verfahren zur Datenanbindung eines Sicherheitsschaltgerätes (9) an eine Steuerung (10), wobei das Sicherheitsschaltgerät (9) zum sicheren Abschalten eines elektrischen Verbrauchers vorgesehen ist.

Um eine einfache Datenanbindung eines Sicherheitsschaltgerätes (9) an eine Steuerung (10) zu ermöglichen wird vorgeschlagen, dass das Sicherheitsschaltgerät (9) mittels einer IO-Link Verbindung (11) an eine Steuerung (10) anschließbar ist.

## Beschreibung

Die Erfindung betrifft ein Verfahren und eine Vorrichtung zur Datenanbindung eines Sicherheitsschaltgerätes, welches zum sicheren Abschalten eines elektrischen Verbrauchers vorgesehen ist, an eine Steuerung.

In Bereich der Automatisierungstechnik ist häufig ein sicherheitsgerichtetes Überwachen und Steuern von Prozessen erwünscht. Für diesen Zweck wird als wesentlicher Baustein der Sicherheitskette ein Sicherheitsschaltgerät eingesetzt. Dieses Sicherheitsschaltgerät ist meist für eine Überwachung der Sicherheitsfunktionen der Sensoren, eine Überwachung der Sensorleitungen, eine Überwachung der korrekten Funktion des Sicherheitsschaltgerätes, eine Überwachung der Aktoren (z.B. Schütze) im Abschaltkreis und einer sicherheitsgerichteten Abschaltung bei Gefährdungen (z.B. über einen NOT-AUS-Taster) zuständig. Ein Sicherheitsschaltgerät bildet somit innerhalb der Automatisierungslandschaft eine autarke sichere Einheit über welche ein sicherheitsgerichteter Prozess gesteuert wird.

Um das Sicherheitsschaltgerät innerhalb der Automatisierungslandschaft zu integrieren wird dieses Sicherheitsschaltgerät mittels Parallelverdrahtung an eine Steuerung (z.B. SPS, CNC, IPC) angeschlossen. Hierbei ist jedes Signal (z.B. Parameterdaten, Diagnosedaten, Freigabesignale, Gerätezustände, etc.) einer bestimmten Leitung fest zugeordnet. Das bedeutet, dass die jeweiligen Signale jeweils eine separate Leitung benötigen. Bei einer Übertragung von mehreren Signalen kommt es somit zu einem erheblichen Verdrahtungsaufwand zwischen dem Sicherheitsschaltgerät und der Steuerung. Die Energieversorgung des Sicherheitsschaltgerätes erfolgt üblicherweise über eine separate Leitung. Eine Diagnose und Parametrierung der Sicherheitsschaltgeräte erfolgt meist lokal am Gerät.

Eine solche Parallelverdrahtung führt erfahrungsgemäß zu einem Heranwachsen eines recht umfangreichen Kabelbaums. Hierdurch wird der Installationsaufwand des Sicherheitsschaltgerätes erschwert und somit das Fehlerpotential hinsichtlich einer falschen Implementierung erhöht.

Der Erfindung liegt die Aufgabe zugrunde, eine einfache Datenanbindung eines Sicherheitsschaltgerätes an eine Steuerung zu ermöglichen.

Die Lösung der gestellten Aufgabe gelingt durch ein Sicherheitsschaltgerät zum sicheren Abschalten eines elektrischen Verbrauchers, wobei dieses mittels einer IO-Link Verbindung an eine Steuerung anschließbar ist.

Ferner wird die Aufgabe gelöst, durch ein Verfahren zur Datenanbindung eines Sicherheitsschaltgerätes an eine Steuerung, wobei das Sicherheitsschaltgerät zum sicheren Abschalten eines elektrischen Verbrauchers vorgesehen ist, wobei das Sicherheitsschaltgerät mittels einer IO-Link Verbindung an die Steuerung angeschlossen wird.

Weitere vorteilhafte Ausführungsformen ergeben sich aus den Unteransprüchen.

Unter der IO-Link Verbindung ist ein innerhalb der PNO (PROFIBUS Nutzerorganisation e.V.) erarbeitetes standardisiertes Kommunikationssystem zur Anbindung intelligenter Sensoren und Aktoren an ein Automatisierungssystem zu verstehen. Die Standardisierung umfasst dabei sowohl die elektrischen Anschlussdaten als auch ein digitales Kommunikationsprotokoll, über das die Sensoren und Aktoren mit dem Automatisierungssystem in Datenaustausch treten. Die IO-Link Verbindung basiert auf einem 3-Leiter-System, über welches sowohl die Kommunikation als auch die Energieversorgung erfolgen kann. Dieses 3-Leiter-System wird letztendlich durch ein IO-Link Kabel ausgebildet. Die IO-Link Verbindung gibt somit die Anschlussdaten am Gerät vor, sowie den Großteil des Kommunikationsprotokolls.

Dadurch, dass bei der Verbindung zwischen dem Sicherheitsschaltgerät und der Steuerung anstelle einer Parallelverdrahtung erfindungsgemäß das für Sensoren und Aktoren standardisierte IO-Link Kommunikationssystem angewandt wird ergeben sich hinsichtlich der Datenanbindung der Sicherheitsschaltgeräte erhebliche Vorteile. Anstelle einer üblicherweise notwendigen komplizierten und fehleranfälligen Parallelverdrahtung des Sicherheitsschaltgerätes mit der Steuerung genügt nun ein einfaches Verbinden des Sicherheitsschaltgerätes mit der Steuerung mittels des standardisierten IO-Link Kabels.

Hierfür muss seitens des Sicherheitsschaltgerätes sowie der zugehörigen Steuerung eine spezifizierte IO-Link Kommunikationsschnittstelle ausgebildet sein. Durch das Implementieren der IO-Link Kommunikationsschnittstelle in dem Sicherheitsschaltgerät kann die Kommunikation sowie die Energieversorgung über das standardisierte IO-Link Verfahren erfolgen. Auf diese Weise erspart sich ein Anwender einen erheblichen Verdrahtungsaufwand. Anstelle von mehreren Leitungen muss lediglich eine IO-Link Verbindung und somit ein IO-Link Kabel zwischen dem Sicherheitsschaltgerät und der Steuerung verlegt werden. Neben der einfacheren Verdrahtung werden zusätzlich Materialkosten gespart und eine Wartung der Anlagen wird erleichtert.

In einer vorteilhaften Ausführungsform erfüllt das Sicherheitsschaltgerät mindestens die Sicherheitskategorie 3 der europäischen Norm EN 954-1.

Hierdurch vergrößert sich das Einsatzspektrum des Sicherheitsschaltgerätes um den sicherheitsgerichteten Bereich.

In einer vorteilhaften Ausführungsform ist das Sicherheitsschaltgerät über die IO-Link Verbindung mit Energie versorgbar.

Hierdurch muss das Sicherheitsschaltgerätes nicht über ein separates Kabel mit Energie versorgt werden. Der Verdrahtungsaufwand wird reduziert und Materialkosten können eingespart werden.

In einer vorteilhaften Ausführungsform ist das Sicherheitsschaltgerät zum Senden und/oder Empfangen eines Gerätezustandes über die IO-Link Verbindung eingerichtet.

Der Gerätezustand der an dem Sicherheitsschaltgerät verbundenen Geräten bzw. des Sicherheitsschaltgerätes kann oft direkt am Gerät abgelesen werden. Dies erfordert jedoch eine lokale Anwesenheit einer Person.

Alternativ kann der Gerätezustand durch das Verbinden des Sicherheitsschaltgerätes mit einer Steuerung ausgelesen werden, so dass über ein mit der Steuerung verbundenes System die Informationen abgerufen werden können.

Dadurch, dass des Sicherheitsschaltgerätes mit der Steuerung über die IO-Link Verbindung verbunden ist muss kein separates Kabel für den Gerätezustand vom Sicherheitsschaltgerät zu der Steuerung verlegt werden. Die Kommunikation kann direkt über die bestehende IO-Link Verbindung erfolgen. Der Verdrahtungsaufwand wird somit reduziert und Materialkosten können eingespart werden.

In einer vorteilhaften Ausführungsform ist das Sicherheitsschaltgerät zum Senden und/oder Empfangen eines Freigabesignals über die IO-Link Verbindung eingerichtet.

Dadurch, dass des Sicherheitsschaltgerätes mit der Steuerung über die IO-Link Verbindung verbunden ist muss kein separates Kabel für das Freigabesignal vom Sicherheitsschaltgerät zu der Steuerung verlegt werden. Die Kommunikation kann direkt über die bestehende IO-Link Verbindung erfolgen. Der Verdrahtungsaufwand wird somit reduziert und Materialkosten können eingespart werden.

In einer vorteilhaften Ausführungsform ist das Sicherheitsschaltgerät zum Senden und/oder Empfangen eines Parameters über die IO-Link Verbindung eingerichtet.

Dadurch, dass des Sicherheitsschaltgerätes mit der Steuerung über die IO-Link Verbindung verbunden ist muss kein separates Kabel für die Parameter vom Sicherheitsschaltgerät zu der Steuerung verlegt werden. Die Kommunikation kann direkt über die bestehende IO-Link Verbindung erfolgen. Der Verdrahtungsaufwand wird somit reduziert und Materialkosten können eingespart werden.

In einer vorteilhaften Ausführungsform ist das Sicherheitsschaltgerät zum Senden und/oder Empfangen einer Diagnoseinformation über die IO-Link Verbindung eingerichtet.

Dadurch, dass des Sicherheitsschaltgerätes mit der Steuerung über die IO-Link Verbindung verbunden ist muss kein separates Kabel für die Diagnoseinformation vom Sicherheitsschaltgerät zu der Steuerung verlegt werden. Die Kommunikation kann direkt über die bestehende IO-Link Verbindung erfolgen. Der Verdrahtungsaufwand wird somit reduziert und Materialkosten können eingespart werden.

In einer vorteilhaften Ausführungsform umfasst ein Industrielles Automatisierungssystemsystem ein erfindungsgemäßes Sicherheitsschaltgerät und die Steuerung, wobei das Sicherheitsschaltgerät mittels der IO-Link Verbindung mit der Steuerung verbunden ist.

Hierbei weist die Steuerung sowie das Sicherheitsschaltgerät ein geeignetes Kommunikationsmodul zur standardisierten IO-Link Kommunikation auf. Durch die Koppelung des Sicherheitsschaltgerätes mit der Steuerung über die IO-Link Verbindung kann sowohl die Energieversorgung als auch die Kommunikation über ein Kabel erfolgen. Eine aufwendige Parallelverdrahtung der beiden Geräte entfällt. Über die IO-Link Verbindung kann mühelos der Gerätezustand abgefragt werden, ein Freigabesignal ausgegeben werden, Diagnosedaten übertragen werden, Parameter übermittelt werden, sowie die Energieversorgung erfolgen.

Industrielle Automatisierungssystemsysteme können auf diese Weise einfacher, schneller und übersichtlicher Verbunden werden. Materialkosten können eingespart werden und Fehlerquellen, durch beispielsweise falsches Anschließen zweier Leitungen, können vermieden werden.

Im Folgenden wird die Erfindung und Ausgestaltung der Erfindung anhand der in den Figuren dargestellten Ausführungsbeispiele näher beschrieben und erläutert. Es zeigen:
- FIG 1: ein schematischer Aufbau eines aus dem Stand der Technik bekannten industriellen Automatisierungssystems, wobei ein herkömmliches Sicherheitsschaltgerät über eine Parallelverdrahtung mit einer herkömmlichen Steuerung verbunden ist,
- FIG 2: ein schematische Aufbau eines industriellen Automatisierungssystems, wobei ein Sicherheitsschaltgerät mittels einer IO-Link Verbindung mit einer Steuerung verbunden ist.

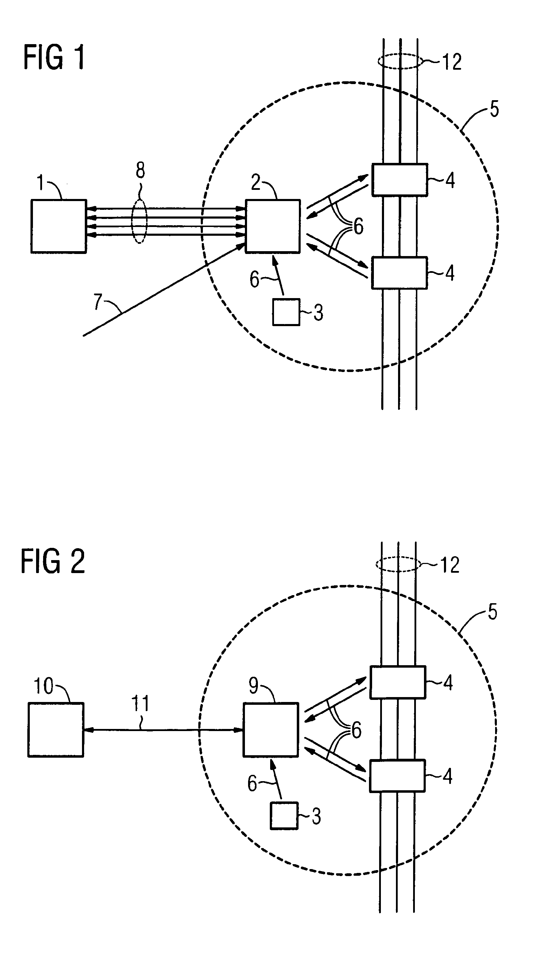

FIG 1 zeigt einen schematischen Aufbau eines aus dem Stand der Technik bekannten industriellen Automatisierungssystems, wobei ein herkömmliches Sicherheitsschaltgerät 2 über eine Parallelverdrahtung 8 mit einer Steuerung 1 verbunden ist.

Eine Versorgungsleitung 12 eines elektrischen Verbrauchers (z.B. eine Maschine oder Maschinenanlage) weist mehrere Schaltgeräte 4 auf. Diese Schaltgeräte 4 können den Stromkreislauf der Versorgungsleitung 12 eines elektrischen Verbrauchers unterbrechen. Die Schaltgeräte 4 sind über geeignete Mittel zur Geräteanbindung 6, vorzugsweise Kabel, mit dem herkömmlichen Sicherheitsschaltgerät 2 verbunden. Ebenso ist ein Bedienelement 3, wie beispielsweise eine Not-Aus Taster, mit geeigneten Mittel zur Geräteanbindung 6 mit dem herkömmlichen Sicherheitsschaltgerät 2 verbunden.

Im sicherheitsgerichtetem Bereich 5 stellt das herkömmliche Sicherheitsschaltgerät 2 gewissermaßen ein Steuerung für die mit ihr verbundenen Geräte 3, 4 dar. Wird beispielsweise der Not-Aus Taster 3 betätigt, so muss das herkömmliche Sicherheitsschaltgerät 2 dafür sorgen, dass an einer entsprechenden Stelle ein Schaltgerät 4 die Versorgungsleitung 12 eines elektrischen Verbrauchers unterbricht und somit eine möglicherweise auftretende Gefahrenquelle vermieden wird.

Das herkömmliche Sicherheitsschaltgerät 2 ist über die Parallelverdrahtung 8 mit der herkömmlichen Steuerung 1 (z.B. SPS, CNC, IPC) verbunden. Sofern der Gerätezustand, Freigabesignale, Diagnosedaten, Parameter von dem herkömmlichen Sicherheitsschaltgerät 2 an die herkömmliche Steuerung 1 übertragen werden sollen muss jedes zu übertragende Signal einer bestimmten Leitung der Parallelverdrahtung 8 fest zugeordnet werden. Das bedeutet, dass die jeweiligen Signale jeweils eine separate Leitung benötigen. Somit kommt es bei einer Übertragung von mehreren Signalen zu einem erheblichen Verdrahtungsaufwand zwischen dem herkömmlichen Sicherheitsschaltgerät 2 und der herkömmlichen Steuerung 1.

Eine Energieversorgung des herkömmlichen Sicherheitsschaltgerätes 2 erfolgt über eine separate Energieversorgungsleitung 7.

Figur 2 zeigt einen schematischen Aufbau eines industriellen Automatisierungssystems, wobei ein Sicherheitsschaltgerät 9 mittels einer IO-Link Verbindung 11 mit einer Steuerung 10 verbunden ist.

Eine Versorgungsleitung 12 eines elektrischen Verbrauchers (z.B. eine Maschine oder Maschinenanlage) weist mehrere Schaltgeräte 4 auf. Diese Schaltgeräte 4 können den Stromkreislauf der Versorgungsleitung 12 des elektrischen Verbrauchers unterbrechen. Die Schaltgeräte 4 sind über geeignete Mittel zur Geräteanbindung 6, vorzugsweise Kabel, mit dem Sicherheitsschaltgerät 9 verbunden. Ebenso ist ein Bedienelement 3, wie beispielsweise eine Not-Aus Taster, mit geeigneten Mitteln zur Geräteanbindung 6 mit dem Sicherheitsschaltgerät 9 verbunden.

Im sicherheitsgerichtetem Bereich 5 stellt das Sicherheitsschaltgerät 9 gewissermaßen ein Steuerung für die mit ihr verbundenen Geräte 3, 4 dar. Wird beispielsweise der Not-Aus Taster 3 betätigt, so muss das Sicherheitsschaltgerät 9 dafür sorgen, dass an einer entsprechenden Stelle ein Schaltgerät 4 die Versorgungsleitung 12 eines elektrischen Verbrauchers unterbricht und somit eine möglicherweise auftretende Gefahrenquelle vermieden wird.

Das Sicherheitsschaltgerät 9 ist über die IO-Link Verbindung 11 mit der Steuerung 10 (z.B. SPS, CNC, IPC) verbunden. Sofern der Gerätezustand, Freigabesignale, Diagnosedaten, Parameter von dem Sicherheitsschaltgerät 9 an die Steuerung 10 übertragen werden sollen kann dies über eine einfache Punkt zu Punkt Verbindung mittels der IO-Link Verbindung 11 zwischen der Steuerung 10 und dem Sicherheitsschaltgerät 9 erfolgen. Das bedeutet, dass die jeweiligen Signale über die standardisierte IO-Link Verbindung 11 übertragen werden können und somit nur ein Kabel erforderlich ist. Bei einer Parallelverdrahtung müsste diesbezüglich für das jeweilige Signal jeweils eine separate Leitung verlegt werden. Somit kommt es bei einer Übertragung von mehreren Signalen zu keinem sonst üblichen Verdrahtungsaufwand zwischen dem erfinderischen Sicherheitsschaltgerät 9 und der Steuerung 10.

Die Energieversorgung des Sicherheitsschaltgerätes 9 kann ebenso über die IO-Link Verbindung 11 erfolgen.

Somit kann über die einfache IO-Link Punkt zu Punkt Verbindung zwischen dem Sicherheitsschaltgerät 9 und der Steuerung 10 sowohl die gesamte Kommunikation sowie die Energieversorgung für das Sicherheitsschaltgerät 9 stattfinden.

## Patentansprüche

1. Verfahren zur Datenanbindung eines Sicherheitsschaltgerätes (9) an eine Steuerung (10), wobei das Sicherheitsschaltgerät (9) zum sicheren Abschalten eines elektrischen Verbrauchers vorgesehen ist,
**dadurch gekennzeichnet, dass** das Sicherheitsschaltgerät (9) mittels einer IO-Link (11) Verbindung an die Steuerung (10) angeschlossen wird.

2. Verfahren nach Anspruch 1,
wobei das Sicherheitsschaltgerät (9) mindestens die Sicherheitskategorie 3 der europäischen Norm EN 954-1 erfüllt.

3. Verfahren nach einem der vorhergehenden Ansprüche,
wobei eine Energieversorgung des Sicherheitsschaltgerätes (9) ebenfalls über die IO-Link Verbindung (11) erfolgt.

4. Verfahren nach einem der vorhergehenden Ansprüche,
wobei über die IO-Link Verbindung (11) ein Gerätezustand übermittelt wird.

5. Verfahren nach einem der vorhergehenden Ansprüche,
wobei über die IO-Link Verbindung (11) ein Freigabesignal übermittelt wird.

6. Verfahren nach einem der vorhergehenden Ansprüche,
wobei über die IO-Link Verbindung (11) ein Parameter übermittelt wird.

7. Verfahren nach einem der vorhergehenden Ansprüche,
wobei über die IO-Link Verbindung (11) eine Diagnoseinformation übermittelt wird.

8. Sicherheitsschaltgerät (9) zum sicheren Abschalten eines elektrischen Verbrauchers,
**dadurch gekennzeichnet, dass** dieses mittels einer IO-Link Verbindung (11) an eine Steuerung (10) anschließbar ist.

9. Sicherheitsschaltgerät (9) nach Anspruch 8,
wobei das Sicherheitsschaltgerät (9) mindestens die Sicherheitskategorie 3 der europäischen Norm EN 954-1 erfüllt.

10. Sicherheitsschaltgerät (9) nach einem der Ansprüche 8 bis 9,
wobei das Sicherheitsschaltgerät (9) über die IO-Link Verbindung (11) mit Energie versorgbar ist.

11. Sicherheitsschaltgerät (9) nach einem der Ansprüche 8 bis 10,
wobei das Sicherheitsschaltgerät (9) zum Senden und/oder Empfangen eines Gerätezustandes über die IO-Link Verbindung (11) eingerichtet ist.

12. Sicherheitsschaltgerät (9) nach einem der Ansprüche 8 bis 11,
wobei das Sicherheitsschaltgerät (9) zum Senden und/oder Empfangen eines Freigabesignals über die IO-Link Verbindung (11) eingerichtet ist.

13. Sicherheitsschaltgerät (9) nach einem der Ansprüche 8 bis 12,
wobei das Sicherheitsschaltgerät (9) zum Senden und/oder Empfangen eines Parameters über die IO-Link Verbindung (11) eingerichtet ist.

14. Sicherheitsschaltgerät (9) nach einem der Ansprüche 8 bis 13,
wobei das Sicherheitsschaltgerät (9) zum Senden und/oder Empfangen einer Diagnoseinformation über die IO-Link Verbindung (11) eingerichtet ist.

15. Industrielles Automatisierungssystemsystem umfassend ein Sicherheitsschaltgerät (9) nach einem der Ansprüche 8 bis 14 und die Steuerung (10), wobei das Sicherheitsschaltgerät (9) mittels der IO-Link Verbindung (11) mit der Steuerung (10) verbunden ist.
